Europäisches Patentamt

European Patent Office

Office européen des brevets

(19)

(11) Veröffentlichungsnummer: **0 532 988 B1**

(12) **EUROPÄISCHE PATENTSCHRIFT**

(45) Veröffentlichungstag der Patentschrift: **22.11.95**

(51) Int. Cl.$^6$: **C08G 63/672**

(21) Anmeldenummer: **92115052.0**

(22) Anmeldetag: **03.09.92**

Die Akte enthält technische Angaben, die nach dem Eingang der Anmeldung eingereicht wurden und die nicht in dieser Patentschrift enthalten sind.

(54) **Verfahren zur Herstellung statistischer Copolyester.**

(30) Priorität: **20.09.91 DE 4131362**

(43) Veröffentlichungstag der Anmeldung: **24.03.93 Patentblatt 93/12**

(45) Bekanntmachung des Hinweises auf die Patenterteilung: **22.11.95 Patentblatt 95/47**

(84) Benannte Vertragsstaaten: **DE ES FR GB IT NL**

(56) Entgegenhaltungen:
**EP-A- 0 174 265
EP-A- 0 281 496
FR-A- 2 306 227
GB-A- 1 060 401
US-A- 3 651 172**

(73) Patentinhaber: **Zimmer Aktiengesellschaft Borsigallee 1 D-60388 Frankfurt (DE)**

(72) Erfinder: **Thiele, Ulrich, Dr. Geschwister-Scholl-Strasse 1 W-6454 Bruchköbel (DE)**
Erfinder: **Schumann, Heinz-Dieter, Dr. Adalbert-Stifter-Strasse 35 W-6457 Maintal 2 (DE)**

EP 0 532 988 B1

**Beschreibung**

Die Erfindung betrifft ein Verfahren zur Herstellung statistischer Copolyester mit niedrigem Comonomer-Anteil aus Homopolyester und Copolyester mit höherem Comonomer-Gehalt, insbesondere aus Polyethylenterephthalat und Isophthalsäure- und/oder 1,4-Bis-(hydroxymethyl)-cyclohexan-haltigem Co-Polyethylenterephthalat.

Statistische Copolyester werden üblicherweise hergestellt, indem das Gemisch der Monomeren der Veresterung oder Umesterung mit nachfolgender Polykondensation unterworfen wird. Man kann auch ein oder mehrere Comonomere der Vorkondensation zusetzen. Technische Großanlagen umfassen meist mehrere in Reihe geschaltete Reaktoren samt Nebenaggregaten, wie Glykol-Rückgewinnung und -kreisläufe, und fordern ein hohes Investitionsvolumen. Ein Produzent, der neben großen Mengen Homopolyester, zum Beispiel Polyethylenterephthalat für Fasern, kleinere Mengen an Copolyester, zum Beispiel modifiziertes Polyethylenterephthalat für Flaschen, herstellen möchte, steht vor dem wirtschaftlichen Problem, entweder eine zusätzliche Produktionsstraße für den Copolyester zu errichten oder nennenswerte Mengen an nicht-typgerechtem Produkt während der Umstellungsphasen Homopolyester/Copolyester/Homopolyester in Kauf zu nehmen.

Es ist auch bekannt, 1,4-Bis-(hydroxymethyl)-cyclohexan enthaltendes Co-Polyethylenterephthalat mit etwa der gleichen Menge Homo-Polyethylenterephthalat in der Schmelze zu mischen und gegebenenfalls danach diese Mischung nach Überführung in Pulverform einer aufbauenden Wärmebehandlung zu unterwerfen (US-A 3 651 172). Die auf diese Weise erhaltenen Polyester sind jedoch Block-Copolyester, die sich in ihren Eigenschaften deutlich von statistischen Copolyestern unterscheiden und sich folglich nicht für die gleichen Anwendungsfälle eignen.

Aufgabe der vorliegenden Erfindung ist daher das Auffinden eines Verfahrens zur Herstellung statistischer Copolyester, welches mit geringen Investitionskosten verbunden ist und bei dem praktisch kein nicht-typgerechtes Produkt anfällt. Insbesondere betrifft die Aufgabe bei vorhandener Produktion größerer Mengen Polyethylenterephthalat, zum Beispiel für Fasern, eine möglichst wirtschaftliche Herstellung kleinerer Mengen Co-Polyethylenterephthalat für Hohlkörper und Flaschen sicherzustellen.

Diese Aufgabe wird erfindungsgemäß entsprechend den Angaben der Patentansprüche gelöst.

Der einzusetzende Polyester (A) ist Polyethylenterephthalat üblicher Qualität und Zusammensetzung, wie es zum Beispiel zur Faserherstellung verwendet wird. Die Intrinsic-Viskosität beträgt 0,5 bis 0,8 dl/g, vorzugsweise 0,55 bis 0,65 dl/g, und der Diethylenglykol-Gehalt 0,6 bis 2,0 Gew.-%. Vom Polykondensationskatalysator herrührend, enthält es normalerweise 50 - 300 ppm Sb. Je nach örtlichen Gegebenheiten wird von wieder aufgeschmolzenem Granulat ausgegangen oder direkt ein Teilstrom der aus einem Polykondensationsreaktor austretenden Schmelze zu dem erfindungsgemäß zu verwendenden Mischaggregat geleitet.

Bei dem Polyester (B) handelt es sich um ein Prepolymer mit einer Intrinsic-Viskosität von 0,1 bis 0,6 dl/g, vorzugsweise 0,15 bis 0,30 dl/g, welches mindestens 10 Gew.-% Isophthalsäure und/oder 1,4-Bis-(hydroxymethyl)-cyclohexan enthält, wobei die Differenz zu je 100 Mol.-% Dicarbonsäuren bzw. Diole aus Terephthalsäure und aus Ethylenglykol, welches bis zu 50 Mol.-% durch Diethylenglykol ersetzt sein kann, besteht. Der Polyester (B) enthält somit zwei bis fünf Komponenten, ausgewählt aus Isophthalsäure, Terephthalsäure, 1,4-Bis-(hydroxymethyl)-cyclohexan, Ethylenglykol und Diethylenglykol, wobei die Summe der Isophthalsäure-Einheiten und der 1,4-Bis-(hydroxymethyl)-cyclohexan-Einheiten mindestens 10 Gew.-%, bezogen auf den Polyester (B), betragen muß und wobei der Anteil an Diethylenglykol-Einheiten in Mol.-% kleiner oder gleich ist als der Anteil an Ethylenglykol-Einheiten. Der Begriff Polyester (B) umfaßt hier also auch die Homopolyester, Polyethylenisophthalat, Poly-(cyclohexan-1,4-dimethylen)-terephthalat und Poly-(cyclohexan-1,4-dimethylen)-isophthalat. Durch die verhältnismäßig niedrige Viskosität bzw. Kurzkettigkeit der Polymermoleküle wird die statistische Verteilung im End-Copolyester begünstigt.

Aufgeschmolzenes Prepolymer-Granulat kann verwendet werden. Vorzugsweise wird das Prepolymer jedoch unmittelbar in einer einfachen, einen oder maximal zwei Reaktoren umfassenden Ver- oder Umesterungs- und Vorkondensationsanlage erzeugt. Der Investitionsaufwand für eine solche Prepolymeranlage beträgt nur einen Bruchteil der für eine komplette Polyesteranlage erforderlichen Kosten. Es entfällt ein Teil der Reaktoren und Nebenanlagen, und die verbleibenden Ausrüstungsteile sind weniger kostenintensiv.

Für die Prepolymer-Herstellung werden Terephthalsäure oder deren Ester und/oder Isophthalsäure oder deren Ester sowie Ethylenglykol, das bis zu 50 Mol.-% durch Diethylenglykol ersetzt sein kann, und/oder 1,4-Bis-(hydroxymethyl)-cyclohexan bei etwa Normaldruck und üblichen Temperaturen im Bereich von 230 bis 290 °C umgesetzt. In Hinsicht auf die erfindungsgemäße weitere Behandlung und eine möglichst homogene Verteilung im Polymer empfiehlt sich der Zusatz von 10 bis 1000 ppm Metall eines üblichen Polykondensationskatalysators, vorzugsweise einer Antimon-, Titan- oder Germanium-Verbindung, wie beispielsweise Antimontriacetat, -glykolat oder -trioxid, Titan-tetra-(oxyalkylat), Germaniumdioxid oder -hydrogenphosphit. Bevorzugt beträgt die Katalysator-Konzentration im Prepolymer (B) 100 bis 200 %, besonders bevorzugt etwa 150 % der im Polyester (A) vorhandenen Polykondensationskatalysator-Menge. Die Prepolymer-Herstellung kann kontinuierlich oder diskontinuierlich erfolgen. Im letzteren Fall ist ein Zwischenlagergefäß für die Schmelze oder für das Granulat vorzusehen.

Prepolymerschmelze (B) und Polyesterschmelze (A) werden einem Mischaggregat zugeführt und reagieren teilweise, und zwar unter Homogenisierung im geschmolzenen Zustand, während 1 bis 50 min, vorzugsweise 5 bis 15 min. Das Mengenverhältnis der beiden Schmelzeströme ergibt sich rein mathematisch aus dem Comonomer-Anteil des Prepolymers (B) und dem gewünschten Comonomer-Gehalt des herzustellenden statistischen Copolyesters (C). Bevorzugt wird der gesamte Polyester (B) zunächst mit 10 bis 50 Gew.-% des Polyesters (A) in einem Mischextruder vermengt und das Extrudat anschließend in einem statischen Mischer mit den restlichen 90 bis 50 % des Polyesters (A) vermischt. Dies ermöglicht einen geringeren apparativen Aufwand, da ein kleinerer Extruder genügt. Die Mischdauer, definiert als die Zeit vom Zusammentreffen der Schmelzen der Polyester (A) und (B) bis zum Eintritt der Mischung in den nachfolgenden Granulator, wird von der Homogenisierfähigkeit der verwendeten handelsüblichen Mischaggregate und dem Volumen dieser Apparate sowie deren Verbindungsleitungen bestimmt.

Die in den Granulator eintretende Schmelzemischung ist aufgrund ihres Schmelzpunktes, der sich von dem des Polymers (A) nur wenig unterscheidet, überwiegend als physikalische Polymermischung anzusehen. Die Umwandlung in ein statistisches Copolymer bleibt der nachfolgenden Festphasenbehandlung vorbehalten.

Der erfindungsgemäß herzustellende statistische Copolyester ist hauptsächlich zur Verarbeitung zu Hohlkörpern und Flaschen bestimmt, also für Anwendungsgebiete, bei denen Farbe und Glanz eine besondere Rolle spielen. In diesem Fall wird der Prepolymerschmelze oder der Mischung beider Schmelzen zu Beginn der Mischphase ein Blue-Toner, bestehend, bezogen auf den statistischen Copolyester (C), aus maximal 5 ppm einer Polyester-löslichen Mischung im Mengenverhältnis 3 : 1 bis 1 : 3, bevorzugt 1 : 1, eines roten und eines blauen Farbstoffes, vorzugsweise von Estofilrot S-RBL und Estofilblau S-GFP der Firma Sandoz, oder aus 10 bis 60 ppm Co plus 10 bis 60 ppm P in Form ihrer Verbindungen, zugesetzt.

Des weiteren, insbesondere wenn die Verarbeitung durch Extrusionsblasen erfolgen soll und eine höhere Schmelzefestigkeit gewünscht wird, können zu Beginn der Mischphase 100 bis 3000 ppm, bezogen auf Copolyester (C), eines tri- oder tetrafunktionellen Comonomers, wie Trimethylolethan, Trimethylolpropan, Glycerin oder Pentaerythrit, zugesetzt werden.

Die Schmelzemischung wird in bekannter Weise granuliert, wobei auf die Größe der Chips, entsprechend 0,5 - 5,0 g/100 Chips, vorzugsweise 1,0 -2,0 g/100 Chips, zu achten ist. Zu kleine Chips, Pulver zum Beispiel, behindern den Stoffaustausch in der festen Phase und somit die Ausbildung einer statistischen Verteilung innerhalb der Polymerketten.

Das Granulat wird anschließend zunächst unter Inertgas, zum Beispiel Stickstoff, bei einer Temperatur $T_1$ über 150 °C und unterhalb der Schmelztemperatur während 0,5 bis 3,0 h kristallisiert und danach unter Inertgas oder Vakuum bei einer Temperatur $T_2$ über 150 °C und kleiner oder gleich $T_1$ bis zum Erreichen der gewünschten Intrinsic-Viskosität nachkondensiert. Hierfür sind normalerweise 1 bis 20 h anzusetzen. Granulat, welches Prepolymer mit höherem Zusatz an Polykondensationskatalysator enthält, benötigt geringere Nachkondensationszeiten als solches mit Prepolymer mit niedrigem Katalysator-Zusatz.

Überraschenderweise wurde gefunden, daß das so nachbehandelte Granulat eine Schmelztemperatur, gemessen mittels DSC (differential scanning calorimetry), aufweist, die um nicht mehr als 2 °C höher ist als die gemessene Schmelztemperatur statistischer Copolyester gleicher summarischer Zusammensetzung. Auch die sonstigen Eigenschaften des erfindungsgemäß hergestellten Copolyesters sind identisch mit denen von statistischen Copolyestern, die durch direkte Polykondensation der Monomeren erhalten wurden.

Aus Vorversuchen wurde ermittelt, daß die mittels DSC gemessene Schmelztemperatur $T_M$ von durch direkte Polykondensation hergestellten statistischen Copolyestern, die als Comonomere Diethylenglykol (DEG), Isophthalsäure (IPA) und/oder 1,4-Bis-(hydroxymethyl)-cyclohexan (CHDM) bis zu einer Gesamt-Konzentration von 5 Gew.-% enthalten, nach folgender Formel bestimmt werden kann:

$$T_M \, (°C) = 261 - (DEG \cdot 4{,}20) - (IPA \cdot 3{,}04) - (CHDM \cdot 4{,}66)$$

wobei für DEG, IPA und CHDM die Konzentration in Gew.-% des jeweiligen Comonomers im Copolyester einzusetzen ist.

Anders als beim geschilderten Stand der Technik werden erfindungsgemäß statistische Copolyester erhalten, keine Block-Copolyester. Die Gründe hierfür sind nicht völlig geklärt, sicher ist aber, daß bei Einhaltung der beanspruchten Schmelze-Mischdauer statistische Copolymere nur entstehen, wenn der Polyester (B) verhältnismäßig niedermolekular ist und die Chips eine Mindestgröße nicht unterschreiten. Bei Einsatz eines Polyesters (B) mit einer Intrinsic-Viskosität von mehr als 0,6 dl/g werden statistische Copolymere nur dann erhalten, wenn die Schmelzphasenbehandlung wesentlich, bis zum Erreichen einer überwiegend statistischen Verteilung bereits in der Schmelze, verlängert wird. Die Nachkondensation reicht ansonsten für den notwendigen Mokekül-Ausgleich nicht aus. Bei einer derart langen Schmelzphasen-Behandlung lassen sich aber Verfärbungen des Polymers und Gelbildung nur schwer vermeiden.

Statistische Copolyester (C) mit einem etwas höheren Comonomer-Gehalt als 5 Gew.-%, beispielsweise bis etwa 10 Gew.-%, sind analog nach dem erfindungsgemäßen Verfahren herstellbar.

Die nachfolgenden Beispiele unterstützen die Erfindung, ohne sie einzuschränken.

Die Bestimmung der Intrinsic-Viskosität (I.V.) erfolgte an einer Lösung von 0,5 g Polyester in 100 ml eines Gemisches aus Phenol und 1,2-Dichlorbenzol (3 : 2) bei 25 °C.

Diethylenglykol (DEG), Isophthalsäure (IPA) und 1,4-Bis-(hydroxymethyl)-cyclohexan (CHDM) wurden nach Druck-Methanolyse des Polyesters gaschromatographisch ermittelt.

Die COOH-Endgruppen wurden durch Titration bestimmt.

Die Schmelztemperatur ($T_M$), die Glasumwandlungstemperatur ($T_G$) und die Kristallisationstemperatur ($T_K$) wurden mittels DSC ermittelt, wobei vor der eigentlichen Messung die Probe kurzzeitig auf 300 °C erwärmt und sofort abgeschreckt wurde.

Vergleichsbeispiele (Beispiel 1 und 2):

Beispiel 1

8000 g Terephthalsäure
272 g Isophthalsäure
3422 g Ethylenglykol
70 g Diethylenglykol
180 ppm Antimon als Antimontriacetat (bezogen auf Polyester)
1,5 ppm Estofilrot S-RBL (bezogen auf Polyester)
1,5 ppm Estofilblau S-GFP (bezogen auf Polyester)
20 ppm Phosphor als $H_3PO_4$ (bezogen auf Polyester)
wurden in einem Mischer zu einer stabilen Paste verrührt und diese anschließend während einer Zeit von 120 min mit konstanter Geschwindigkeit in ein Veresterungsgefäß, ausgestattet mit Rührer, Kolonne und Mantelheizung, dosiert, in welchem sich vom vorhergehenden Ansatz 50 % Veresterungsprodukt gleicher Zusammensetzung befanden. Die Temperatur wurde während der Zeit der Einspeisung auf 261 °C gehalten.

Nach Abschluß der Pasteneinspeisung wurde unter Normaldruck in einer Zeit von 30 min die Temperatur auf 270 °C erhöht und anschließend im gleichen Gefäß unter Erhöhung der Produkttemperatur auf 278 °C der Druck während einer Zeit von 30 min auf 50 mbar reduziert. Das so erhaltene Veresterungsprodukt wurde anschließend in einen Polykondensationsreaktor überführt und während einer Zeit von 160 min bei einer Temperatur von 281 °C und einem Druck von 0,70 mbar polykondensiert. Nach Abbruch der Polykondensation wurde der Reaktorinhalt während einer Zeit von 15 min granuliert. Das durchschnittliche Gewicht der Granulatkörner betrug 15 mg. Das so hergestellte Polyestergranulat wurde anschließend unter Stickstoff während einer Zeit von 60 min bei 215 °C kristallisiert und danach bei 210 °C während einer Zeit von 10 h polykondensiert (SSP). In Tabelle 1 sind die analytischen Kennwerte der Zwischen- und Endprodukte zusammengestellt.

Beispiel 2

Der Polyester wird wie im Beispiel 1 beschrieben, aber ohne Verwendung von Isophthalsäure und Diethylenglykol hergestellt, wobei anstelle dieser Comonomeren 1,4-Bis-(hydroxymethyl)-cyclohexan (CHDM) nach folgender Rezeptur verwendet wurde:
8272 g Terephthalsäure
3422 g Ethylenglykol
161 g CHDM
Antimon und Blue-Toner wie im Beispiel 1.

Die analytischen Kennwerte sind Tabelle 1 zu entnehmen.

Tabelle 1

| Analysenwerte der Vergleichsprodukte | | | | |
|---|---|---|---|---|
| | Beispiel 1 | | Beispiel 2 | |
| | amorph | nach SSP | amorph | nach SSP |
| IV (dl/g) | 0,642 | 0,785 | 0,625 | 0,791 |
| COOH (meq/g) | 20 | 14 | 19 | 14 |
| DEG (Gew.-%) | 1,21 | 1,21 | 0,57 | 0,57 |
| IPA (Gew.-%) | 2,82 | 2,82 | 0 | 0 |
| CHDM (Gew.-%) | 0 | 0 | 1,57 | 1,57 |
| $T_M$ (°C) | 247,0 | 246,5 | 251,4 | 250,4 |
| $T_K$ (°C) | 157,0 | 157,0 | 142,3 | 145,3 |
| $T_G$ (°C) | 77,4 | 77,5 | 79,3 | 78,4 |
| $T_M$ berechnet (°C) | | 247,3 | | 251,2 |

Herstellung des Polyesters (A):

Beispiel 3

8272 g Terephthalsäure wurden mit 3422 g Ethylenglykol wie im Beispiel 1 zu Polyester umgesetzt, wobei als Katalysator 180 ppm Antimon als Antimontriacetat verwendet wurden. Der so erhaltene Polyester hatte eine Intrinsic-Viskosität von 0,63 dl/g, einen DEG-Gehalt von 0,87 Gew.-% und 28 meq/g COOH-Endgruppen. Die Schmelztemperatur, Glasumwandlungstemperatur und die Kristallisationstemperatur wurden mittels DSC, wie folgt, ermittelt:
$T_M$ 256 °C; $T_G$ 79,8 °C; $T_K$ 148 °C.

Herstellung der Polyester (B) (Beispiele 4 bis 7):

Beispiel 4

Isophthalsäure und Ethylenglykol:

8272 g Isophthalsäure wurden zusammen mit 3422 g Ethylenglykol und 180 ppm Sb als $Sb_2O_3$ in einem Rührreaktor bei einem Innendruck von 1,5 bar und einer Temperatur von 261 °C unter Wasserabspaltung verestert. Nach Abschluß der Veresterung wurde auf Normaldruck entspannt und anschließend unter Reduzierung des Druckes auf 50 mbar bei einer Temperatur von 270 °C so lange polykondensiert, bis eine Intrinsic-Viskosität von 0,15 dl/g gemessen wird. Nach dem Brechen des Vakuums mit Stickstoff wurde das Vorkondensat auf 150 °C abgekühlt, mit einem Gemisch aus den im Beispiel 1 genannten Farbstoffen im Verhältnis 1 : 1 in einer Menge von 3 ppm, bezogen auf Copolyester (C), versetzt und unter weiterem Abkühlen granuliert.

Beispiel 5

15 Gew.-% IPA im Polyester (B):

6825 g Terephthalsäure, 1447 g Isophthalsäure und 3422 g Ethylenglykol wurden, wie im Beispiel 4, zu Polyester mit einer Intrinsic-Viskosität von 0,60 dl/g verarbeitet, wobei anstelle von 180 ppm Antimon 300 ppm Antimon, bezogen auf den fertigen Copolyester (B), verwendet wurden.

Beispiel 6

18 Gew.-% CHDM im Polyester (B):

7500 g Terephthalsäure, 1737 g 1,4-Bis-(hydroxymethyl)-cyclohexan und 2400 g Ethylenglykol wurden, wie im Beispiel 6, zu einem Vorkondensat mit einer Intrinsic-Viskosität von 0,30 dl/g verarbeitet.

Beispiel 7

35 Gew.-% CHDM im Polyester (B):

6890 g Terephthalsäure, 3600 g 1,4-Bis-(hydroxymethyl)-cyclohexan und 1250 g Ethylenglykol wurden, wie im Beispiel 6, zu einem Vorkondensat mit einer Intrinsic-Viskosität von 0,40 dl/g verarbeitet. Im Unterschied zu der im Beispiel 6 genannten Rezeptur wurde kein Farbstoff zugegeben, sondern zu Beginn der Veresterung zusätzlich Cobalt als Cobaltacetat in solch einer Menge zugesetzt, daß im Endprodukt (C) 40 ppm Co vorliegen. Außerdem wurden 40 ppm Phosphor als Triethylphosphat, bezogen auf Endprodukt (C), kurz vor Abschluß der Reaktion zugesetzt.

Herstellung der statistischen Copolyester (C) (Beispiele 8 und 9):

Beispiel 8

Mischungen aus Polyester (A) des Beispiels 3 und Polyester (B) der Beispiele 4 bis 7 wurden sorgfältig getrocknet und in einem Extruder, dem eine Mischstrecke, bestehend aus einer mit statischen Mischern bestückten Schmelzeleitung, angeschlossen war, aufgeschmolzen und nach einer Verweilzeit von 10 min granuliert. Die Granulate hatten ein durchschnittliches Gewicht der Einzelkörner von 14 - 17 mg.

Die Granulate wurden unter Stickstoff bei 215 °C während einer Zeit von 1 Stunde kristallisiert und anschließend 7 Stunden der Feststoffpolykondensation (SSP) bei 210 °C unterzogen. Die pro Stunde durch den SSP-Reaktor geförderte $N_2$-Menge betrug 1 kg $N_2$ pro 1 kg Polyester.

Alle Polyestergemische wurden vor und nach der SSP auf ihre thermischen DSC-Daten untersucht. Die Ergebnisse sind in Tabelle 2 zusammengestellt.

Beispiel 9

Wie im Beispiel 8 wurde der Polyester (A) des Beispiels 3 mit den Polyestern (B) des Beispiels 4 oder 6 in der Mischstrecke verarbeitet, wobei zusätzlich 700 ppm, bezogen auf das Endprodukt (C), an Pentaerythrit zugesetzt wurden. Alle anderen Schritte erfolgten wie im Beispiel 8 beschrieben.

Die Ergebnisse sind in der Tabelle 3 zusammengestellt.

Tabelle 2

| Herstellung der statistischen Copolyester (C) | | | | |
|---|---|---|---|---|
| Mischung aus Ppolyester (B) des Beispiels Nr. | 4 | 5 | 6 | 7 |
| Menge, Gew.-Teile | 1 | 2 | 2 | 1 |
| + Polyester (A) | | | | |
| Menge, Gew.-Teile | 32 | 9 | 10 | 17 |
| nach Mischung: | | | | |
| I.V. dl/g<br>COOH meq/g<br>$T_M$ °C<br>$T_K$ °C<br>$T_G$ °C | 0,565<br>29,0<br>252,7<br>134,5<br>79,0 | 0,653<br>28,5<br>251,4<br>138,0<br>79,4 | 0,590<br>28,0<br>250,3<br>146,1<br>79,9 | 0,610<br>28,6<br>253,8<br>141,2<br>79,7 |
| nach SSP: | | | | |
| I.V. dl/g<br>COOH meq/g<br>$T_M$ °C<br>$T_K$ °C<br>$T_G$ °C<br>$T_M$ berechnet °C<br>IPA Gew.-%<br>CHDM Gew.-%<br>DEG Gew.-% | 0,735<br>25,0<br>250,2<br>143,8<br>80,9<br>249,9<br>2,4<br>-<br>0,90 | 0,855<br>24,0<br>248,0<br>146,0<br>80,9<br>248,0<br>3,1<br>-<br>0,85 | 0,751<br>23,0<br>245,0<br>159,0<br>81,3<br>243,5<br>-<br>2,9<br>0,93 | 0,780<br>23,0<br>249,8<br>151,9<br>81,3<br>248,2<br>-<br>1,9<br>0,92 |

Tabelle 3

| Herstellung der statistischen Copolyester (C) mit tetrafunktionellem Comonomer | | |
|---|---|---|
| Mischung aus Polyester (B) des Beispiels Nr. | 4 | 6 |
| Menge, Gew.-Teile | 1 | 2 |
| + Polyester (A) | | |
| Menge, Gew.-Teile | 32 | 10 |
| + Pentaerythrit | 700 ppm | 700 ppm |
| nach Mischung: | | |
| IV dl/g | 0,618 | 0,650 |
| COOH meq/g | 28,5 | 29,0 |
| $T_M$ °C | 252,3 | 250,1 |
| $T_K$ °C | 134,8 | 147,8 |
| $T_G$ °C | 79,4 | 80,1 |
| nach SSP: | | |
| IV dl/g | 0,98 | 1,08 |
| COOH meq/g | 23,4 | 22,8 |
| $T_M$ °C | 250,0 | 245,3 |
| $T_K$ °C | 148,3 | 155,0 |
| $T_G$ °C | 81,1 | 81,1 |
| $T_M$ berechnet °C | 249,9 | 243,8 |
| IPA Gew.-% | 2,4 | - |
| CHDM Gew.-% | - | 2,9 |
| DEG Gew.-% | 0,91 | 0,88 |
| Pentaerythrit Gew.-% | 0,07 | 0,07 |

**Patentansprüche**

1. Verfahren zur Herstellung von statistischen Copolyestern (C), enthaltend neben Terephthalsäure-Einheiten und Ethylenglykol-Einheiten, 0,5 bis 2,0 Gew.-% Diethylenglykol-Einheiten sowie 0,5 bis 5,0 Gew.-% Isophthalsäure- und/oder 1,4-Bis-(hydroxymethyl)-cyclohexan-Einheiten, deren Intrinsic-Viskosität gemessen gemäß Beschreibung 0,7 bis 2,0 dl/g beträgt und deren Schmelztemperatur, gemessen mittels DSC, um nicht mehr als 2 °C höher ist als die Schmelztemperatur von durch direkte Polykondensation der Monomeren erhaltenen Copolyestern gleicher summarischer Zusammensetzung, dadurch gekennzeichnet, daß

   - ein Polyester (A) mit einer Intrinsic-Viskosität von 0,5 bis 0,8 dl/g, bestehend aus Polyethylenterephthalat mit 0,6 bis 2,0 Gew.-% Diethylenglykol-Einheiten und
   - ein Polyester (B) mit einer Intrinsic-Viskosität von 0,1 bis 0,6 dl/g, enthaltend, bezogen auf Polyester (B), 10 bis 1000 ppm Sb oder Ti oder Ge und mindestens 10 Gew.-%, Isophthalsäure und/oder 1,4-Bis-(hydroxymethyl)-cyclohexan wobei die Differenz zu je 100 Mol.-% Dicarbonsäuren bzw. Diole aus Terephthalsäure und aus Ethylenglykol, welches bis zu 50 Mol.-% durch Diethylenglykol ersetzt sein kann, besteht,
   - im geschmolzenen Zustand während 1 bis 50 min vermischt werden, anschließend granuliert, und das Granulat mit einem Chips-Gewicht von 0,5 bis 5,0 g/100 Chips unter Inertgas bei einer Temperatur $T_1$ über 150 °C und unterhalb der Schmelztemperatur während 0,5 bis 3 h kristallisiert wird und nachfolgend unter Inertgas oder unter Vakuum bei einer Temperatur $T_2$ über 150 °C und kleiner oder gleich $T_1$ bis zum Erreichen der gewünschten Intrinsic-Viskosität nachkondensiert wird.

2. Verfahren gemäß Anspruch 1, dadurch gekennzeichnet, daß der gesamte Polyester (B) und 10 bis 50 Gew.-% des Polyesters (A) einem Mischextruder zugeführt werden, und das Extrudat anschließend in einem statischen Mischer mit den restlichen 90 bis 50 % des Polyesters (A) vermischt wird.

3. Verfahren gemäß Anspruch 1, dadurch gekennzeichnet, daß dem Polyester (B) vor der Mischzone oder der Mischung der Polyester (A) und (B) zu Beginn der Mischphase, bezogen auf den statistischen Copolyester (C), 0,5 bis 5 ppm einer Polyesterlöslichen Mischung eines roten und eines blauen Farbstoffes im Mengenverhältnis 3 : 1 bis 1 : 3 zugesetzt werden.

4. Verfahren gemäß Anspruch 1, dadurch gekennzeichnet, daß dem Polyester (B) vor der Mischzone oder der Mischung der Polyester (A) und (B) zu Beginn der Mischphase, bezogen auf den statistischen Copolyester (C), 10 bis 60 ppm Co und 10 bis 60 ppm P in Form ihrer Verbindungen zugesetzt werden.

5. Verfahren gemäß Anspruch 1, dadurch gekennzeichnet, daß der Mischung der Polyester (A) und (B) zu Beginn der Mischphase, bezogen auf den statistischen Copolyester (C), 100 bis 3000 ppm eines tri- oder tetrafunktionellen Comonomers zugesetzt werden.

6. Verfahren gemäß Anspruch 1, dadurch gekennzeichnet, daß der Polyester (A) eine Menge (m) im Bereich von 50 bis 300 ppm an Sb enthält und der Polyester (B) eine Menge im Bereich von (m) bis (2m) an Sb oder Ti oder Ge enthält.

7. Verfahren gemäß Anspruch 1, dadurch gekennzeichnet, daß die Intrinsic-Viskosität des statistischen Copolyesters (C) 0,7 bis 0,9 dl/g, die des Polyesters (A) 0,55 bis 0,65 dl/g und die des Polyesters (B) 0,15 bis 0,30 dl/g beträgt.

8. Verfahren gemäß Anspruch 1, dadurch gekennzeichnet, daß die Polyester (A) und (B) im geschmolzenen Zustand während 5 bis 15 min vermischt werden und das Chips-Gewicht 1,0 bis 2,0 g/100 Chips beträgt.

**Claims**

1. A process for preparing statistical copolyesters (C) containing, in addition to terephthalic acid units and ethylene glycol units, 0.5 to 2.0 wt.% of diethylene glycol units and 0.5 to 5.0 wt.% of isophthalic acid and/or 1,4-bis-(hydroxymethyl)-cyclohexane units, whose intrinsic viscosity measured in accordance with the description is 0.7 to 2.0 dl/g and whose melting temperature, measured by means of DSC, is not more than 2°C higher than the melting temperature of copolyesters of the same empirical composition obtained by direct polycondensation of the monomers, characterised in that
   - a polyester (A) with an intrinsic viscosity of 0.5 to 0.8 dl/g, consisting of polyethylene terephthalate with 0.6 to 2.0 wt.% of diethylene glycol units and
   - a polyester (B) with an intrinsic viscosity of 0.1 to 0.6 dl/g containing, with respect to polyester (B), 10 to 1000 ppm of Sb or Ti or Ge and at least 10 wt.% of isophthalic acid and/or 1,4-bis-(hydroxymethyl)-cyclohexane, wherein the difference to make 100 mol-% of each of the dicarboxylic acids or diols comprises terephthalic acid and ethylene glycol respectively, which can be replaced by up to 50 mol-% of diethylene glycol,
   - are mixed in the molten state for 1 to 50 min, are then granulated and the granular material with a chip-weight of 0.5 to 5.0 g/100 chips is crystallised under an inert gas at a temperature $T_1$ higher than 150°C and less than the melting temperature for 0.5 to 3 hours and then postcondensed under an inert gas or under a vacuum at a temperature $T_2$ higher than 150°C and less than or equal to $T_1$ until the desired intrinsic viscosity is achieved.

2. A process according to Claim 1, characterised in that all of polyester (B) and 10 to 50 wt.% of polyester (A) are fed to a compounding extruder and the extrudate is then mixed with the remaining 90 to 50 wt.% of polyester (A) in a statistical mixer.

3. A process according to Claim 1, characterised in that 0.5 to 5 ppm, with respect to statistical copolyester (C), of a polyester-soluble mixture of a red and a blue colorant in the ratio by amounts of 3 : 1 to 1 : 3 are added to polyester (B) before the mixing zone or to the mixture of polyesters (A) and (B) at the start of the mixing phase.

4. A process according to Claim 1, characterised in that 10 to 60 ppm of Co and 10 to 60 ppm of P, with respect to statistical copolyester (C), in the form of their compounds are added to polyester (B) before the mixing zone or to the mixture of polyesters (A) and (B) at the start of the mixing phase.

5. A process according to Claim 1, characterised in that 100 to 3000 ppm, with respect to statistical copolymer (C), of a tri or tetrafunctional comonomer are added to the mixture of polyesters (A) and (B) at the start of the mixing phase.

6. A process according to Claim 1, characterised in that polyester (A) contains an amount (m) in the range 50 to 300 ppm of Sb and polyester (B) contains an amount in the range (m) to (2m) of Sb or Ti or Ge.

7. A process according to Claim 1, characterised in that the intrinsic viscosity of statistical copolymer (C) is 0.7 to 0.9 dl/g, that of polyester (A) is 0.55 to 0.65 dl/g and that of polyester (B) is 0.15 to 0.30 dl/g.

8. A process according to Claim 1, characterised in that polyesters (A) and (B) are mixed for 5 to 15 min in the molten state and the chip-weight is 1.0 to 2.0 g/100 chips.

**Revendications**

1. Procédé de préparation de copolyesters statistiques (C) contenant, outre des unités d'acide téréphtalique et des unités d'éthylèneglycol, 0,5 à 2,0 % en poids d'unités diéthylèneglycol ainsi que 0,5 à 5,0 % en poids d'unités acide isophtalique et/ou d'unités 1,4-bis-(hydroxyméthyl)-cyclohexane dont la viscosité intrinsèque mesurée selon la description représente 0,7 à 2,0 dl/g et dont la température de fusion, mesurée par DSC, ne dépasse pas de 2°C la température de fusion de copolyesters obtenus par polycondensation directe des monomères de même composition globale, caractérisé en ce que l'on mélange à l'état fondu pendant 1 à 50 min
   - un polyester (A) ayant une viscosité intrinsèque de 0,5 à 0,8 dl/g, constitué de poly(téréphtalate d'éthylène) et de 0,6 à 2,0 % en poids d'unités diéthylèneglycol et
   - un polyester (B) ayant une viscosité intrinsèque de 0,1 à 0,6 dl/g, contenant, par rapport au polyester (B) 10 à 1000 ppm de Sb ou Ti ou Ge et au moins 10 % en poids d'acide isophtalique et/ou du 1,4-bis-(hydroxyméthyl)-cyclohexane où la différence à 100 % molaire des acides dicarboxyliques ou des diols consiste en l'acide téréphtalique et l'éthylèneglycol, qui peut être remplacé jusqu'à 50 % molaire par du diéthylèneglycol,
   - ensuite on granule et le granulé ayant un poids de granulé de 0,5 à 5,0 g pour 100 granulés est cristallisé sous gaz inerte à une température $T_1$ supérieure à 150°C et en dessous de la température de fusion pendant 0,5 à 3 h et ensuite on post-condense sous gaz inerte ou sous vide à une température $T_2$ supérieure à 150°C et inférieure ou égale à $T_1$ jusqu'à ce qu'on obtienne la viscosité intrinsèque souhaitée.

2. Procédé selon la revendication 1, caractérisé en ce qu'on introduit tout le polyester (B) et 10 à 50 % en poids du polyester (A) dans une extrudeuse de mélange et ensuite on mélange l'extrudat dans un mélangeur statique avec le reste des 90 à 50 % de polyester (A).

3. Procédé selon la revendication 1, caractérisé en ce qu'on ajoute au polyester (B) avant la zone de mélange ou au mélange de polyesters (A) et (B) au début de la phase de mélange, par rapport au copolyester statistique (C), 0,5 à 5 ppm d'un mélange soluble dans le polyester d'un colorant rouge et d'un colorant bleu en proportion quantitative 3:1 à 1:3.

4. Procédé selon la revendication 1, caractérisé en ce qu'on ajoute au polyester (B) avant la zone de mélange ou au mélange de polyesters (A) et (B) au début de la phase de mélange, par rapport au copolyester statistique (C), 10 à 60 ppm de Co et 10 à 60 ppm de P sous forme de leurs composés.

5. Procédé selon la revendication 1, caractérisé en ce qu'on ajoute au mélange de polyester (A) et (B) au début de la phase de mélange, par rapport au copolyester statistique (C), 100 à 3000 ppm d'un co-monomère tri- ou tétrafonctionnel.

6. Procédé selon la revendication 1, caractérisé en ce que le polyester (A) contient une quantité (m) dans l'intervalle de 50 à 300 ppm de Sb et le polyester (B) contient une quantité de Sb ou Ti ou Ge dans le domaine de (m) à (2m).

7. Procédé selon la revendication 1, caractérisé en ce que la viscosité intrinsèque du copolyester statistique (C) représente 0,7 à 0,9 dl/g, celle du polyester (A) est 0,55 à 0,65 dl/g et celle du polyester (B) est 0,15 à 0,30 dl/g.

8. Procédé selon la revendication 1, caractérisé en ce que les polyesters (A) et (B) à l'état fondu sont mélangés pendant 5 à 15 min et que le poids de granulé représente 1,0 à 2,0 g pour 100 granulés.